Europäisches Patentamt

European Patent Office

Office européen des brevets

(19)

(11) **EP 1 548 601 A1**

(12) **DEMANDE DE BREVET EUROPEEN**

(43) Date de publication:
**29.06.2005 Bulletin 2005/26**

(51) Int Cl.[7]: **G06F 12/14**

(21) Numéro de dépôt: **04292521.4**

(22) Date de dépôt: **25.10.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **23.12.2003 FR 0315323**

(71) Demandeur: **Stmicroelectronics SA**
**F-92100 Montrouge (FR)**

(72) Inventeurs:
• **Völp, Marcus**
  **76137 Karlsruhe (DE)**
• **Orlando, William**
  **13790 Peynier (FR)**

(74) Mandataire: **Verdure, Stéphane**
**Cabinet Plasseraud**
**65/67 rue de la Victoire**
**75440 Paris Cedex 09 (FR)**

(54) **Contrôle d'accès mémoire dans un appareil électronique**

(57)      Un procédé de contrôle d'accès mémoire dans un appareil électronique comprenant au moins un dispositif (21,22,23) et une mémoire partagée (4), externe audits dispositifs, reliés par au moins un bus de communication (3), comprend les étapes suivantes. Une unité de contrôle d'accès mémoire reçoit une commande d'accès à la mémoire. On vérifie la validité de l'opération reçue. En cas de validité, l'opération est effectuée. Dans le cas contraire, l'opération n'est pas exécutée, et aucune signalisation ni commande correspondante n'est produite. Cet échec "en silence" de l'opération, permet en particulier de pallier l'impossibilité de contrôler les dispositifs ayant une possibilité de DMA.

FIG. 2

EP 1 548 601 A1

**Description**

La présente invention concerne de façon générale la gestion des accès mémoire dans les appareils électroniques à mémoire partagée. Plus particulièrement, elle concerne un procédé et un dispositif de contrôle d'accès mémoire, permettant de gérer les opérations de lecture et d'écriture dans une mémoire qui peuvent provenir d'une pluralité de dispositifs ayant tous accès à ladite mémoire.

L'invention trouve des applications, en particulier, dans les appareils électroniques non intégrés ayant une mémoire principale et un ou plusieurs dispositifs capables d'accéder à la mémoire en étant reliés à la mémoire via au moins un bus de communication. De tels dispositifs sont par exemple des processeurs et/ou des dispositifs ayant une possibilité d'accès direct à la mémoire, ou possibilité de DMA (de l'anglais "Direct Memory Access"). L'appareil peut en particulier avoir une architecture SMP (de l'anglais "Symetric Multi-Processor"), c'est-à-dire qu'il peut comprendre plusieurs dispositifs qui sont des processeurs.

Les appareils électroniques principalement visés ici sont des appareils câblés unitaires, c'est-à-dire formés d'un assemblage d'éléments (processeurs, contrôleurs de périphériques, contrôleurs de DMA, cartes réseau, mémoires, etc.) avec une certaine unité physique et fonctionnelle. Un tel appareil est par exemple un ordinateur à usage général, un boîtier décodeur ou "Set-Top Box", un assistant numérique personnel ou PDA (de l'angiais "Personal Digital Assistant"), un téléphone portable, d'autres produits portables sans fil, etc. La notion d'appareil au sens dé la présente invention exclut notamment les systèmes distribués, tels que les systèmes informatiques complexes comprenant plusieurs machines (ordinateurs, serveurs, routeurs, etc.) reliées en réseau ou via l'Internet, qui mettent en oeuvre des techniques d'accès mémoire spécifiques.

Le document EP-A-1 271 327 divulgue un procédé pour faire fonctionner un système numérique ayant une pluralité de ressources connectées à une mémoire partagée. Le procédé comprend la définition d'une pluralité de régions à l'intérieur d'un espace d'adressage de la mémoire. Des droits d'accès peuvent être attribués à des dispositifs pour au moins une partie des régions de la mémoire. On identifie la région de la mémoire qui est concernée par une requête d'accès à la mémoire provenant de la pluralité de dispositifs. On reconnaît celle des dispositifs qui a initié la requête d'accès à la mémoire. On détermine si le dispositif ainsi reconnu a les droits d'accès à la région identifiée. Et enfin on permet l'accès à la région identifiée par la ressource reconnue si cette dernière a les droits d'accès à la région identifiée.

Un tel procédé, toutefois, prévoit qu'en cas de violation de droits d'accès, la requête d'accès est arrêtée. De plus la violation de droits est signalée par l'émission en retour d'une erreur de bus, permettant à la ressource ayant initié la requête d'accès d'obtenir des informations sur les systèmes, les droits, etc.

Or, arrêter une requête d'accès qui a été initiée par un dispositif ayant une possibilité de DMA requiert une connaissance approfondie de l'architecture matérielle du contrôleur de DMA et de celle du dispositif. De plus, l'arrêt de la requête suppose que l'instance provoquant l'arrêt peut directement commander les dispositifs, alors que certains contrôleurs de DMA ne tolèrent pas qu'on arrête une requête DMA une fois qu'elle a été initiée.

En outre, l'erreur de bus qui est générée en cas de violation de droits d'accès peut permettre à un tiers mal intentionné, lorsque la violation de droits d'accès résulte d'une tentative de piratage de l'appareil électronique, d'interpréter l'échec de la requête d'accès en vue de la génération d'une nouvelle tentative d'accès.

L'invention a pour objet de pallier les inconvénients de l'état de la technique ci-dessus.

Un premier aspect de l'invention propose ainsi un procédé de contrôle d'accès mémoire dans un appareil électronique comprenant au moins un dispositif et une mémoire partagée, externe audits dispositifs, reliés par au moins un bus de communication. Le procédé comprend :

- la réception d'une commande correspondant à une opération de lecture ou d'écriture dans la mémoire initiée par un dispositif initiateur déterminé ;
- la vérification de la validité de l'opération reçue ;
- l'exécution de la lecture ou de l'écriture dans la mémoire partagée selon des paramètres de l'opération reçus avec la commande, en réponse à une opération respectivement de lecture ou d'écriture valide ;
- l'inexécution de l'écriture sans production d'une quelconque signalisation ni commande correspondante, en réponse à une opération d'écriture non valide ;
- l'inexécution de la lecture sans production d'une quelconque signalisation ni commande correspondante, avec retour d'une information non signifiante au dispositif initiateur, en réponse à une opération de lecture non valide.

La vérification de la validité de l'opération peut comprendre l'authentification du dispositif initiateur et/ou la vérification de l'intégrité de l'opération reçue.

Lorsque le plan mémoire de la mémoire comprend plusieurs régions auxquelles des droits d'accès en lecture et des droits d'accès en écriture peuvent être respectivement associés à chacun des dispositifs, la vérification de la validité de l'opération peut aussi comprendre, en variante ou en complément, la vérification du droit d'accès du dispositif à la région concernée par l'opération en fonction d'une part de la nature de l'opération reçue, et d'autre part de paramètres de l'opération reçus avec la commande et comprenant un identificateur du dispositif initiateur et une adresse mémoire.

Par "information non signifiante", on entend des données qui ne révèlent pas le contenu de la mémoire.

L'information non signifiante retournée au dispositif initiateur en réponse à une opération de lecture non valide comprend de préférence un mot binaire de même taille qu'un mot mémoire retourné par une opération de lecture valide, ledit mot binaire comprenant des valeurs binaires déterminées, par exemple des "0", ou ayant la valeur NaTVal ("Not A Thing Value").

En variante, cette information non signifiante comprend un mot binaire de même taille qu'un mot mémoire retourné par une opération de lecture valide, ledit mot binaire comprenant des valeurs binaires aléatoires.

Un deuxième aspect de l'invention concerne une unité de contrôle d'accès mémoire, ou MCU (de l'anglais "Memory Control Unit"), comprenant des moyens pour la mise en oeuvre du procédé selon le premier aspect.

Un troisième aspect de l'invention concerne un appareil électronique comprenant une mémoire et une pluralité de dispositifs pouvant accéder à ladite mémoire via au moins un bus de communication, ainsi qu'une unité de contrôle d'accès mémoire selon le deuxième aspect. Des exemples de tels appareils ont été donnés en introduction.

D'autres caractéristiques et avantages de l'invention apparaîtront encore à la lecture de la description qui va suivre. Celle-ci est purement illustrative et doit être lue en regard des dessins annexés sur lesquels :

- la figure 1 est un schéma bloc illustrant un exemple d'appareil électronique à architecture SMP auquel peut s'appliquer le procédé selon la présente invention ;
- la figure 2 est schéma bloc d'une unité de contrôle d'accès mémoire selon un mode de mise en oeuvre du procédé de la présente invention.

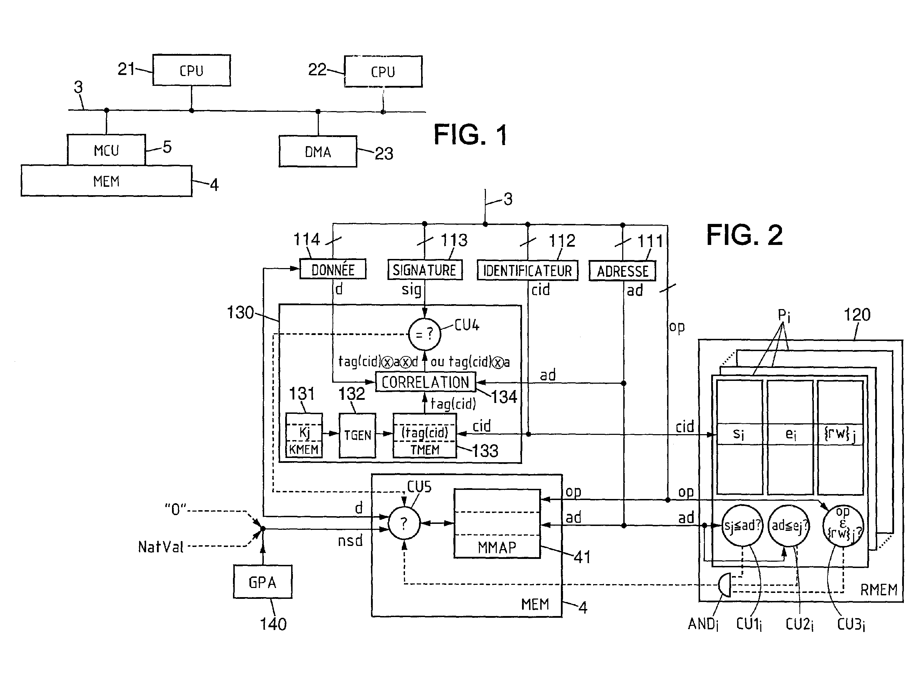

La figure 1 montre un exemple d'appareil électronique auquel peut s'appliquer le procédé selon la présente invention.

L'appareil comprend une mémoire principale 4 ainsi qu'au moins un dispositif, et dans le cas général un nombre déterminé M de dispositifs. Les M dispositifs sont reliés ensemble par l'intermédiaire d'au moins un bus de communication 3. En général, la mémoire et les dispositifs sont reliés par l'intermédiaire d'un bus comprenant des lignes de commande, des lignes d'adresses, des lignes de données, et d'autres lignes selon les besoins de l'application. Dans l'exemple représenté à la figure, M est égal à 3, et les trois dispositifs sont référencés 21, 22 et 23.

La mémoire 4 est par exemple une mémoire volatile à accès aléatoire ou RAM (de l'anglais "Random Access Memory"). La mémoire 4 est dite externe en ce sens qu'elle est à l'extérieur des dispositifs. De plus, elle est dite partagée en ce sens qu'elle est destinée à être accédée en lecture et/ou en écriture par plusieurs des dispositifs déterminés ou par la totalité d'entre eux.

Les dispositifs 21 et 22 sont par exemple des processeurs (CPU, de l'anglais "Central Progressing Unit"). Le dispositif 23 est par exemple un contrôleur de DMA. De tels dispositifs ont en commun la possibilité d'accéder à la mémoire 4, en lecture et/ou en écriture. Au moins certains des dispositifs autres que le contrôle de DMA ont la possibilité d'émettre des requêtes DMA pour obtenir un accès direct à la mémoire. Lorsqu'il existe plusieurs tels dispositifs, le contrôleur de DMA sert à arbitrer ces requêtes DMA.

L'architecture décrite ci-dessus est dite SMP en ce sens que l'appareil électronique comprend plusieurs processeurs et une mémoire partagée 4, externe aux processeurs, reliés ensemble par le bus 3.

La mémoire 4 est reliée au bus 3 par l'intermédiaire d'une unité 5 de contrôle d'accès mémoire, ou MCU (de l'anglais "Memory Control Unit"), qui comprend des moyens pour la mise en oeuvre du procédé de contrôle d'accès mémoire qui sera décrit plus loin.

Dans un exemple de mise en oeuvre, la MCU gère un nombre déterminé N de régions distinctes du plan mémoire de la mémoire 4, appelées régions mémoires par raccourci. Dans l'exemple considéré ici, N est égal à 4 (N=4). La définition des régions mémoires et la gestion des droits d'accès à la mémoire 4 sont implémentées dans la MCU.

Les différentes régions mémoires peuvent se recouvrir deux à deux. De préférence, toutefois, des régions mémoires auxquelles un dispositif déterminé a accès, soit en lecture soit en écriture, sont disjointes (c'est-à-dire non recouvrantes) dans le plan mémoire. Dit autrement, un dispositif déterminé n'a pas accès à des régions du plan mémoire se recouvrant. Ceci simplifie la gestion des droits d'accès mise en oeuvre dans la MCU.

Chacune des régions mémoires est définie par deux adresses limites, à savoir une adresse de début et une adresse de fin, respectivement désignées par exemple par les lettres $s_i$ et $e_i$, pour une région mémoire d'indice i, où i est un nombre entier compris entre 1 et N.

A chaque dispositif déterminé, il peut être sélectivement affecté des privilèges pour chaque région mémoire déterminée. Ces privilèges peuvent comprendre un droit d'accès en lecture (pour la lecture dans ladite région), un droit d'accès en écriture (pour l'écriture dans ladite région), et/ou un droit de modification permettant de modifier les droits d'accès en lecture et en écriture dans ladite région et/ou ses adresse limites $s_i$ et $e_i$.

Dans ce qui suit, on ne s'intéressera qu'aux droits d'accès en écriture et en lecture. Classiquement, on désigne respectivement par les lettres $r_j$ et $w_j$ ces droits d'accès pour un dispositif d'indice j déterminé, où j est un entier compris entre 1 et M.

Ces droits sont stockés dans une structure mémoire adaptée de la MCU, qui comprend autant de pages mémoires que de régions. Chacune de ces N pages mémoires comprend autant de lignes qu'il y a de dispositifs dont les droits d'accès sont gérés par la MCU. Ces lignes sont adressables par une information correspondant à un identificateur de dispositif.

La figure 2 donne un schéma fonctionnel d'un exemple de dispositif pour la mise en oeuvre du procédé de contrôle d'accès mémoire selon la présente invention. Tous les éléments de ce dispositif sont par exemple compris dans la MCU.

La transmission d'informations sur le bus 3 entre les dispositifs et la mémoire partagée 4 est de préférence une transmission signée. Dit autrement, les informations échangées et en particulier les commandes d'accès mémoire générées dans les dispositifs, sont protégées par une signature. Un flux de motifs binaires respectivement utilisés par chaque dispositif pour signer ses commandes d'accès mémoire, est généré parallèlement à la fois dans le dispositif et dans la MCU. La signature permet une authentification du dispositif initiateur et/ou la vérification de l'intégrité de la commande transmise par celui-ci sur le bus de communication.

Lorsqu'une commande d'accès en lecture ou une commande d'accès en écriture dans la mémoire 4 est initiée par un dispositif quelconque, la MCU reçoit des les informations suivantes, à partir du bus 3, via des lignes du bus respectives prévues à cet effet :

- une adresse ad, qui est placée dans un registre d'entrée appelé registre d'adresse 111 ;
- un identificateur de dispositif cid, qui est placé dans un registre d'entrée appelé registre d'identificateur 112 ;
- une signature sig, qui est placée dans un registre d'entrée appelé registre de signature 113 ; et,
- le cas échéant (c'est-à-dire lorsqu'il s'agit d'une commande d'accès en écriture), une donnée d qui est placée dans un registre d'entrée/sortie appelé registre de données 114 ;
- un code d'opération ("OP code" en anglais), qui correspond ici à une opération d'écriture ou à une opération de lecture.

L'adresse ad est l'adresse du mot mémoire dans la mémoire partagée 4 qui est concerné par l'opération.

L'identificateur de dispositif cid permet d'identifier de manière univoque le dispositif initiateur, c'est-à-dire celui qui a initié la commande.

La signature sig est calculée par le dispositif initiateur, à partir de l'adresse ad et d'un motif binaire tag, et le cas échéant à partir en outre de la donnée d. Le motif binaire tag est un mot binaire de taille déterminée, généré pour chaque commande par découpage d'un flux de données binaires pseudo-aléatoires, lequel est produit par une fonction pseudo-aléatoire à partir d'une clé de cryptage K propre à chaque dispositif. La clé binaire est partagée entre ledit dispositif et la MCU, c'est-à-dire qu'elle est connue à la fois du dispositif et de la MCU.

La signature sig est par exemple une information corrélant les deux informations ad et tag ou les trois informations ad, tag, et d. Cette corrélation est obtenue, par exemple grâce à une combinaison des informations dans une opération OU-Exclusif (XOR). Dit autrement, la signature sig est donnée respectivement par le calcul :

$$sig = tag \oplus ad \qquad (1)$$

ou, lorsque l'opération est une opération d'écriture, par le calcul :

$$sig = tag \oplus ad \oplus d \qquad (2)$$

De cette façon, les informations sensibles de la commande, que sont l'adresse ad et le cas échéant la donnée d, sont protégées par la signature sig, laquelle est transmise avec la commande. Un tiers mal intentionné ne peut donc pas altérer l'adresse ad ou la donnée d transitant sur le bus 3, sans que cette altération soit détectable du fait de la perte de correspondance avec la signature sig des données transmises.

Pour renforcer la sécurité, le motif tag n'est utilisé qu'une seule fois, c'est-à-dire pour une seule commande. Dit autrement, il change de valeur à chaque commande initiée par le dispositif considéré.

Dans la MCU, une mémoire de régions (RMEM) 120 comprend, ainsi qu'il a été présenté plus haut, une page mémoire $P_i$ pour chacune des N régions mémoires définies dans le plan mémoire (MMAP) 41 de la mémoire 4, avec i compris entre 1 et N. Chaque page mémoire Pi comprend M mots mémoires, chacun contenant l'adresse de début $e_i$, l'adresse de fin $s_i$ de la région mémoire d'indice i, et en outre l'ensemble des droits $\{r,w\}_j$ affectés au dispositif d'indice j pour cette région mémoire. Chaque page mémoire Pi de la mémoire de régions 120 peut être adressée par l'identificateur de dispositif cid stocké dans le registre 112.

Pour chaque région mémoire, la mémoire de régions 120 comprend trois unités de comparaison. Etant donné une opération en cours, initiée par un dispositif identifié par l'identificateur cid et correspondant au dispositif d'indice j dans la mémoire de régions, une première unité de comparaison $CU1_i$ a pour fonction de comparer l'adresse ad stockée dans le registre 111 avec l'adresse $s_i$. Une deuxième unité de comparaison $CU2_i$ sert à comparer l'adresse ad avec l'adresse $e_i$. Enfin, une troisième unité de comparaison $CU2_i$ permet de comparer le code OP de l'opération avec l'ensemble des droits $\{r,w\}_j$ affectés au dispositif initiateur. Si chacune de ces unités de comparaison produit un résultat positif, c'est que le dispositif initiateur dispose bien du droit d'accès correspondant à l'opération en cours, pour la région mémoire dans laquelle se trouve l'adresse concernée.

La MCU comprend en outre un module d'authentification et de vérification d'intégrité 130.

Le module 130 comprend une mémoire de clés (KMEM) 131 dans laquelle sont stockée les clés Kj de chaque dispositif, pour j compris entre 1 et M. A partir de la clé respective $K_j$ de chaque dispositif d'indice j, un générateur de motifs (TGEN) 132 est capable de produire le prochain motif tag qui doit être utilisé par le dispositif. Le générateur 132 comprend par exemple un générateur pseudo-aléatoire (GPA) qui génère un flux continu de données aléatoires, couplé à une unité de segmentation qui découpe ce flux de manière à produire les motifs de taille ad-hoc.

Les motifs ainsi produits sont stockés dans une mémoire de motifs (TMEM) 133. Avantageusement c'est pendant le traitement d'une opération en cours, qui a été initiée par un dispositif déterminé, que le générateur de motifs 132 produit le motif qui sera normalement utilisé par ce dispositif pour sa prochaine opération d'accès mémoire. Le motif ainsi produit est stocké jusqu'à son utilisation ultérieure, lors du traitement de l'opération suivante du même dispositif. Le traitement des opérations d'accès mémoire est ainsi plus rapide.

La mémoire de motifs 133 est adressée par l'identificateur de dispositif cid stocké dans le registre 112. Cela permet de fournir un motif tag(cid) à un module de corrélation 134. Le motif tag(cid) correspond au motif binaire qu'a utilisé le dispositif initiateur pour générer la signature sig stockée dans le registre REG_sig.

Le module 134 reçoit également l'adresse ad stockée dans le registre 111, et le cas échéant la donnée d stockée dans le registre 114. La fonction du module 134 est d'effectuer, au sein de la MCU, le calcul (1) ou le calcul (2) donnés plus haut, à partir des informations disponibles dans la MCU. Dit autrement, le module 134 calcule la signature attendue par la MCU pour l'opération en cours.

Le résultat produit par le module 134 est comparé, par une unité de comparaison CU4, avec la signature sig stockée dans le registre 113. En cas d'égalité, cela signifie que les informations transmises sur le bus 3 proviennent bien du dispositif dont l'identificateur cid a été reçu, et en outre qu'elles n'ont pas été corrompues. Dit autrement, cela signifie que l'authentification du dispositif initiateur et que la vérification de l'intégrité des informations transmise sur le bus ont réussi.

La mémoire partagée 4 comprend un plan mémoire (MMAP) 41 et une unité de comparaison CU5. Le plan mémoire MMAP est adressé par l'adresse ad stockée dans le registre 111.

L'unité CU5 reçoit en entrée une première information indiquant si les résultats des comparaisons effectuées par les trois unités de comparaison $CU1_i$, $CU2_i$ et $CU3_i$ sont simultanément positifs, pour l'une quelconque des pages mémoires Pi de la mémoire de régions RMEM. En pratique, cette première information peut être obtenue en combinant les résultats des trois unités de comparaison $CU1_i$, $CU2_i$ et $CU3_i$, pour i compris entre 1 et N, dans un opérateur logique de type ET à trois entrées $AND_i$ respectif, puis en combinant les sorties de ces N portes ET dans un opérateur logique de type OU à N entrées (non représenté par souci de simplicité).

En outre, l'unité CU5 reçoit en entrée une seconde information correspondant au résultat de la comparaison effectuée par l'unité CU4 du module 130.

Si les première et seconde informations sont vraies, c'est-à-dire si l'opération est valide en ce sens que le dispositif initiateur est authentifié, que les informations de la commande reçues sont intègres, et qu'en outre le dispositif possède effectivement le droit d'accès correspondant à l'opération op demandée pour l'adresse mémoire ad concernée, alors l'opération demandée est effectuée normalement. Dit autrement, la donnée d est écrite dans le plan mémoire MMAP à l'adresse ad s'il s'agit d'une opération d'écriture, ou une donnée (notée également d à la figure par souci de simplicité) est lue dans le plan mémoire MMAP à l'adresse a et est placée dans le registre 114 s'il s'agit d'une opération de lecture.

Dans le cas contraire, il faut distinguer le cas d'une opération d'écriture du cas d'une opération de lecture. Une opération d'écriture n'est pas effectuée. Dit autrement, la valeur stockée dans le mot mémoire de la mémoire 4 ayant l'adresse ad n'est pas modifiée. En réponse à une opération de lecture non valide, ce n'est pas la donnée stockée dans ce mot mémoire qui est placée dans le registre 114 pour être retournée au dispositif initiateur. Au contraire, c'est une information non signifiante nsd qui est placée dans le registre 114 sous la commande de l'unité CU5. Dans les deux cas (opération d'écriture et opération de lecture), la MCU ne génère aucune signalisation associée à l'échec de l'opération. Non plus, elle ne génère aucune interruption ni autre commande en conséquence de cet échec.

Cette information non signifiante nsd comprend avantageusement un mot binaire de même taille qu'un mot mémoire qui serait retourné par une opération de lecture valide.

De préférence, le mot binaire ci-dessus a une valeur aléatoire, produite par un générateur 140 dont une suite de valeurs binaires aléatoires de sortie est découpée pour former un tel mot binaire. La donnée que reçoit le dispositif initiateur en retour, est complètement aléatoire. Il ne peut donc même pas se rendre compte de ce qu'il a été abusé par la MCU. Ceci est particulièrement avantageux pour faire échec aux tentatives d'accès pirates.

Dans les deux cas, c'est-à-dire pour une opération d'écriture non valide et pour une opération de lecture non valide, on dit que la MCU met en oeuvre un échec de l'opération "en silence", en ce sens que ni le dispositif initiateur ni le reste des dispositifs n'ont de moyen de savoir que l'opération a échoué.

Le fonctionnement de la MCU est le suivant. Tout d'abord, la MCU reçoit une commande via le bus 3, laquelle commande correspond à une opération de lecture ou d'écriture dans la mémoire, qui a été initiée par un dispositif initiateur déterminé. La commande comprend des paramètres, à savoir un code opération op qui indique la nature (lecture ou écriture) de l'opération, une adresse ad dans le plan mémoire 41 de la mémoire 4, un identificateur cid du dispositif initiateur, éventuellement une donnée d à écrire (pour une opération d'écriture), et dans tous les cas une signature sig des informations transmises via le bus. Ces paramètres, hormis le code opération op, sont respectivement stockés dans les registres d'entrée 111, 112 et 113, et dans le registre d'entrée/sortie 114.

Grâce à la mémoire de régions 120, on vérifie la validité de l'opération spécifiée dans la commande reçue en ce qui concerne le droit d'accès du dispositif initiateur à la région mémoire concernée par l'opération, c'est-à-dire la région du plan mémoire de la mémoire 4 comprenant l'adresse a. Cette vérification est basée d'une part sur le code opération op, et d'autre part sur l'identificateur cid du dispositif initiateur et sur l'adresse mémoire ad. A cet effet, tous ces paramètres de l'opération, qui ont été reçus avec la commande, sont fournis en entrée de la mémoire de régions 120.

En variante ou complément, on peut utiliser le module d'authentification et/ou de vérification d'intégrité 130, pour vérifier la validité de l'opération spécifiée dans la commande reçue en ce qui concerne l'authentification du dispositif initiateur et/ou en ce qui concerne l'intégrité de la commande reçue. A cet effet, l'adresse ad, l'identificateur cid, la signature sig et le cas échéant la donnée d, sont fournis en entrée du module 130.

Si l'opération est valide, c'est-à-dire si l'une et, le cas échéant, également l'autre des vérifications ci-dessus donnent un résultat positif, l'opération est exécutée selon les paramètres reçus avec la commande. Ces paramètres sont l'adresse ad pour une opération de lecture, ou l'adresse ad et la donnée d pour une opération d'écriture.

En réponse à une opération d'écriture non valide, le procédé prévoit l'inexécution de l'écriture, sans production d'une quelconque signalisation ni commande correspondante. En particulier, aucune erreur bus n'est signalée et aucune interruption n'est générée. Tout se passe comme si l'écriture dans la mémoire avait eu lieu normalement.

En réponse à une opération de lecture non valide, le procédé prévoit aussi l'inexécution de la lecture, sans production d'une quelconque signalisation ni commande correspondante (comme pour une opération d'écriture non valide). Mais en plus, la MCU retourne au dispositif initiateur une information non signifiante nsd. A cet effet, un mot binaire de valeur aléatoire est placé dans le registre d'entrée/sortie 114 de la MCU pour être retourné au dispositif initiateur.

Dans une première variante, le mot binaire retourné en cas d'opération de lecture non valide comprend une suite de valeurs binaires déterminées, par exemple une suite de "0". Cette variante conduit à une MCU plus simple, donc plus économe en termes de puissance de calcul et donc de consommation de courant. Elle est donc conseillée pour les applications où le circuit électronique fonctionne sur batterie.

Dans une autre variante, le mot binaire retourné peut être la valeur NaTVal ("Not A Thing Value") définie dans le document Intel@ Itanium® Architecture Software Developer's Manual, Vol. 1, Révision 2.1, Octobre 2002, page 21 et tableau 5-2 page 78. On obtient les mêmes avantages qu'avec la première variante ci-dessus. Bien entendu, cette seconde variante n'est toutefois possible que dans le cas d'un appareil électronique ayant une architecture qui supporte cette valeur NaTVal, typiquement un appareil réalisé sur une plateforme basée sur le processeur Itanium® de Intel®.

Une configuration d'utilisation dans laquelle la présente invention présente un effet avantageux est la suivante. Supposons qu'à un instant déterminé, le gestionnaire de la mémoire accorde l'accès à une partie de la mémoire à un dispositif déterminé ayant une possibilité de DMA, et ce pour une durée déterminé (par exemple 10 secondes). Supposons que le dispositif en question ne respecte pas son contrat, et engage une requête DMA qui dure plus longtemps, par exemple 20 secondes. Dans un système conventionnel, le gestionnaire de la mémoire, parce qu'il n'a pas accès au matériel du dispositif, ne peut pas valablement utiliser cette partie de la mémoire pendant 20 secondes, car c'est le dispositif qui au final commandera son contenu. Grâce à l'invention, au contraire, le gestionnaire de la mémoire peut réallouer cette partie de la mémoire après avoir révoqué les droits d'accès correspondants du dispositif. La requête DMA va continuer mais, grâce à l'échec "en silence", l'opération de lecture ne pourra pas aboutir à la lecture d'informations sensibles, ou l'opération d'écriture ne pourra modifier le contenu de la mémoire. Dit autrement, la MCU selon l'invention permet de rendre ineffective la requête DMA du dispositif sans requérir une commande appropriée du dispositif qui l'a initiée.

Une autre configuration d'utilisation est celle dans laquelle un dispositif pirate intercepte la commande transmise sur le bus, et modifie par exemple l'adresse pour une opération d'accès en lecture (afin par exemple d'obtenir accès à une zone mémoire protégée dans laquelle est stockée une information sensible), ou modifie la donnée à écrire par une opération de lecture (afin de porter atteinte à l'intégrité des informations stockées dans la mémoire). La vérification effectuée par le module 130 donnera un résultat négatif, puisque le dispositif pirate ne pourra pas générer la signature attendue par la MCU pour les données modifiées transmise sur le bus. Par conséquent l'opération demandée ne sera pas effectuée. Grâce à l'échec "en silence" de l'opération, le dispositif pirate ne saura même pas que sa tentative a échoué. Cela complique sensiblement la tâche d'une personne mal intentionnée souhaitant pirater l'appareil électronique.

## Revendications

1. Procédé de contrôle d'accès mémoire dans un appareil électronique comprenant au moins un dispositif (21,22,23) et une mémoire partagée (4), externe audits dispositifs, reliés par au moins un bus de communication (3), le procédé comprenant :

   - la réception d'une commande correspondant à une opération de lecture ou d'écriture dans la mémoire initiée par un dispositif initiateur déterminé ;

   - la vérification de la validité de l'opération reçue ;

   - l'exécution de la lecture ou de l'écriture dans la mémoire partagée selon des paramètres de l'opération reçus avec la commande, en réponse à une opération respectivement de lecture ou d'écriture valide ;

   - l'inexécution de l'écriture sans production d'une quelconque signalisation ni commande correspondante, en réponse à une opération d'écriture non valide ;

   - l'inexécution de la lecture sans production d'une quelconque signalisation ni commande correspondante, avec retour d'une information non signifiante (nsd) au dispositif initiateur, en réponse à une opération de lecture non valide.

2. Procédé selon la revendication 1, suivant lequel la vérification de la validité de l'opération comprend l'authentification du dispositif initiateur et/ou la vérification de l'intégrité de l'opération reçue.

3. Procédé selon la revendication 2, suivant lequel la transmission de la commande sur le bus est une transmission signée.

4. Procédé selon l'une quelconque des revendications 1 à 3, suivant lequel, le plan mémoire de la mémoire comprend plusieurs régions auxquelles des droits d'accès en lecture et des droits d'accès en écriture peuvent être respectivement associés à chacun des dispositifs, et suivant lequel la vérification de la validité de l'opération comprend la vérification du droit d'accès du dispositif à la région concernée par l'opération en fonction d'une part de la nature (op) de l'opération reçue, et d'autre part de paramètres de l'opération reçus avec la commande et comprenant un identificateur (cid) du dispositif initiateur et une adresse mémoire (a).

5. Procédé selon la revendication 4 suivant lequel les régions du plan mémoire de la mémoire auxquelles un dispositif déterminé a accès sont disjointes.

6. Procédé selon l'une quelconque des revendications 1 à 5, suivant lequel l'information non signifiante retournée au dispositif initiateur en réponse à une opération de lecture non valide comprend un mot binaire de même taille qu'un mot mémoire retourné par une opération de lecture valide, ledit mot binaire ayant une valeur déterminée ("0", NaTVal).

7. Procédé selon l'une quelconque des revendications 1 à 6, suivant lequel l'information non signifiante retournée au dispositif initiateur en réponse à une opération de lecture non valide comprend un mot binaire de même taille qu'un mot mémoire retourné par une opération de lecture valide, ledit mot binaire ayant une valeur aléatoire.

8. Unité de contrôle d'accès mémoire comprenant des moyens pour la mise en oeuvre d'un procédé selon l'une quelconque des revendications précédentes.

9. Appareil électronique comprenant au moins un dispositif (21,22,23) relié à une mémoire partagée (4) par au moins un bus de communication (3), ainsi qu'une unité de contrôle d'accès mémoire selon la revendication 8.

FIG. 1

FIG. 2

**Office européen des brevets**

**RAPPORT DE RECHERCHE EUROPEENNE**

Numéro de la demande

EP 04 29 2521

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2003/204693 A1 (HALL CLIFFORD D ET AL) 30 octobre 2003 (2003-10-30) <br> * figures 1,2 * <br> * page 2, alinéa 14 * <br> * page 4, alinéas 30,32,34,35,37 * <br> * page 5, alinéas 38,44,45 * <br> * page 8, alinéa 68 * <br> ----- | 1-6,8,9 | G06F12/14 |
| A | US 2003/188113 A1 (SUTTON JAMES A ET AL) 2 octobre 2003 (2003-10-02) <br> * page 3, alinéa 23-29 * <br> ----- | 3 | |

DOMAINES TECHNIQUES RECHERCHES (Int.Cl.7)

G06F

Le présent rapport a été établi pour toutes les revendications

| Lieu de la recherche | Date d'achèvement de la recherche | Examinateur |
|---|---|---|
| La Haye | 30 mars 2005 | Filip, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 2521

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-2005

| Document brevet cité au rapport de recherche | Date de publication | Membre(s) de la famille de brevet(s) | Date de publication |
|---|---|---|---|
| US 2003204693 A1 | 30-10-2003 | AUCUN | |
| US 2003188113 A1 | 02-10-2003 | AU 2003220453 A1 | 20-10-2003 |
| | | GB 2403832 A | 12-01-2005 |
| | | WO 03085498 A2 | 16-10-2003 |

EPO FORM P0460

Pour tout renseignement concernant cette annexe : voir Journal Officiel de l'Office européen des brevets, No.12/82